# EUROPEAN PATENT APPLICATION

(11) **EP 4 717 788 A1**
(43) Date of publication of application: **01.04.2026**
(21) Application number: 24853659.1
(22) Date of filing: 08.08.2024
(51) Int. Cl.: C22C 38/16, B23P 15/00, C22C 38/02, C22C 38/04, C21D 8/02, C22C 33/06, C21C 7/00, C21C 7/10, B21B 3/00, B21B 45/02

(54) **STEEL PLATE AND PRODUCTION METHOD THEREFOR**

(30) Priority: 17.08.2023 CN 202311040927
(71) Applicant: Zhangjiagang Rongsheng Special Steel Co. Ltd., Suzhou, Jiangsu 215625 (CN); Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN)
(72) Inventor: ZHANG, Yu, Suzhou, Jiangsu 215625 (CN); ZHAO, Fu, Suzhou, Jiangsu 215625 (CN); WANG, Na, Suzhou, Jiangsu 215625 (CN)
(74) Representative: Gille Hrabal Partnerschaftsgesellschaft mbB Patentanwälte
(86) International application number: PCT/CN2024/110734
(87) International publication number: WO 2025/036249

(57) **Abstract**

The present application provides a steel plate and a production method thereof, relating to the field of alloy technology. The steel plate adopts a corrosion-resistant alloying composition system with Ce+Sn+Cu composite addition. The addition of Ce can not only improve the corrosion resistance of the steel plate, but also Ce easily combines with oxygen to generate spherical oxides and has the ability to induce acicular ferrite nucleation within grains, thereby improving the welding performance of the steel plate. Based on the comprehensive design of chemical components, through precise control of process parameters during rolling process and cooling process, a marine atmospheric corrosion-resistant steel plate capable of withstanding ultra-high line energy welding and with good comprehensive performance is obtained.

## Description

The present application is based on and claims priority to Chinese Patent Application Number CN202311040927.3, filed on August 17, 2023, the entire contents of which are incorporated herein by reference.

### TECHNICAL FIELD

The present application relates to the field of alloy technology, specifically relating to a steel plate and a production method thereof.

### BACKGROUND

Steel plates for marine engineering are required to have high corrosion resistance and excellent low-temperature impact performance, and meanwhile the steel plates are required to have good welding performance, so the quality requirements of steel plates are very high.

Under marine atmospheric environment conditions, water vapor in the marine atmosphere adhered to the rust layer on the steel surface under the influence of capillary action, adsorption action and chemical condensation action, resulting in increased corrosion rate. Corrosion-resistant steels usually improved corrosion resistance by adding alloy elements such as Cr, Ni, Cu, etc., but the addition of these alloy elements usually deteriorated welding performance.

Steel plates capable of withstanding high line energy welding were widely used in the field of marine engineering because they could improve the welding line energy during the welding process and thus could improve welding efficiency; steel plates capable of withstanding high line energy welding had the characteristic that the low-temperature toughness of welding HAZ could still remain stable under welding conditions with high heat input, and the low-temperature toughness problem of heat affected zone under high heat input welding conditions was solved by adopting oxide metallurgy technology and TMCP process; however, when welding heat input was higher than 600kJ/cm, the stability of welding HAZ performance basically could not be guaranteed. Steel capable of withstanding ultra-high line energy welding could withstand welding line energy above 600kJ/cm through low-carbon, low-alloy composition design and inclusion control technology based on oxide metallurgy, thereby meeting the single-pass welding requirements of steel plates with thickness specifications above 40mm; but this type of steel generally did not have corrosion resistance.

Therefore, developing a corrosion-resistant steel capable of withstanding ultra-high line energy welding and with excellent comprehensive performance was urgent.

Any prior art mentioned in the specification does not constitute an acknowledgment or suggestion that such prior art forms part of the common general knowledge in any jurisdiction, or that such prior art could reasonably be expected to be understood, regarded as relevant and/or combined with other prior art by persons skilled in the art.

### SUMMARY

An object of the present application is to provide a steel plate and a production method thereof.

The present application provides a production method of steel plate, comprising steps:
chemical components of the steel plate include in percent by mass: Ce: 0.05~0.5%, Sn: 0.05~0.5%, Cu: 0.1~0.5%, Si: 0.1~0.4%, C: ≤0.12%, Mn: <2.0%, with the balance of Fe and inevitable impurities;
according to the above chemical components, sequentially performing converter steelmaking process, Ladle Furnace refining process and RH Vacuum degassing process to obtain molten steel;
casting the molten steel through a continuous casting process to form a continuous casting slab;
heating and rolling the continuous casting slab to obtain a steel plate, wherein in the rolling process, rough rolling and finish rolling are sequentially adopted, wherein the finish rolling stage is non-recrystallization zone rolling, a cumulative reduction ratio is controlled above 50%, a single pass reduction ratio is controlled above 15%, and a finishing rolling temperature is controlled below 780°C;
performing a cooling process on the steel plate;
the obtained steel plate has an average corrosion weight loss rate <1.2g/(m²×h) in a cyclic immersion corrosion test, and under the condition that welding heat input is not less than 600kJ/cm, an impact energy of heat affected zone (HAZ) of the steel plate at -40°C is ≥200J.

As a further improvement of the present application, the content of Ce in the steel plate is 0.1~0.5% in percent by mass, and the content of Sn in the steel plate is 0.1~0.5% in percent by mass.

As a further improvement of the present application, the converter steelmaking process specifically comprises:
adding clean steel and scrap steel at a ratio of (5~6):1, controlling a molten iron temperature to 1350~1450°C, and sequentially adding ferromanganese, ferrosilicon, and lime to the molten iron for smelting.

As a further improvement of the present application, the Ladle Furnace refining process specifically comprises:
during the Ladle Furnace refining process, performing bottom argon blowing throughout and stirring the molten steel, keeping the molten steel covered.

As a further improvement of the present application, the RH Vacuum degassing process specifically comprises:
during the RH Vacuum degassing process, adding rare earth cored wire of 800m or more at a speed of 4~5 m/s, and adding carbonized rice husk for heat preservation before tapping.

As a further improvement of the present application, the continuous casting process specifically comprises:
controlling a casting temperature to 1540~1560°C, controlling a continuous casting speed to 1.1~1.3m/min, and obtaining a continuous casting slab with a thickness of 320mm through continuous casting.

As a further improvement of the present application, the cooling process specifically comprises:
first performing water cooling on the rolled steel plate, controlling a water cooling rate above 12°C/s, controlling a final cooling temperature to 480~540°C, and performing air cooling to below 350°C after water cooling.

The present application further provides a corrosion-resistant steel plate capable of withstanding ultra-high line energy welding, wherein chemical components of the steel plate include in percent by mass: Ce: 0.05~0.5%, Sn: 0.05~0.5%, Cu: 0.1~0.5%, Si: 0.1~0.4%, C: ≤0.12%, Mn: <2.0%, with the balance of Fe and inevitable impurities.

As a further improvement of the present application, the steel plate is manufactured by the above production method of steel plate.

As a further improvement of the present application, the content of Ce in the steel plate is 0.1~0.5% in percent by mass, and the content of Sn in the steel plate is 0.1~0.5% in percent by mass.

As a further improvement of the present application, in a cyclic immersion corrosion test, an average corrosion weight loss rate of the steel plate is <1.2g/(m²×h).

As a further improvement of the present application, under the condition that welding heat input is not less than 600kJ/cm, an impact energy of heat affected zone (HAZ) of the steel plate at -40°C is ≥200J.

The beneficial effects of the present application are: the steel plate provided by the present application, compared with the existing marine atmospheric corrosion-resistant steel, adopts a corrosion-resistant alloying composition system with Ce+Sn+Cu composite addition. The addition of Ce can not only improve the corrosion resistance of the steel plate, but also Ce easily combines with oxygen to generate spherical oxides and has the ability to induce acicular ferrite nucleation within grains, thereby improving the welding performance of the steel plate. Based on the comprehensive design of chemical components, through precise control of process parameters during rolling process and cooling process, a marine atmospheric corrosion-resistant steel plate capable of withstanding ultra-high line energy welding and with good comprehensive performance is obtained.

The terms "comprise" and variations thereof such as "comprises", "comprised", "comprising", "including", "containing", unless the context clearly dictates otherwise, do not exclude other features, components, elements or steps.

### BRIEF DESCRIPTION OF THE DRAWINGS

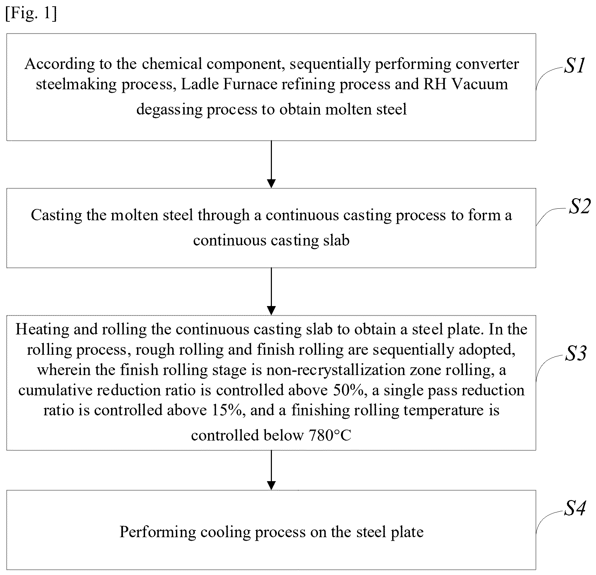

Fig. 1 is a schematic diagram of steps of a production method of steel plate in an embodiment of the present application.

### DETAILED DESCRIPTION

**In** order to make the objects, technical solutions and advantages of the present application clearer, the technical solutions of the present application will be clearly and completely described below in combination with specific embodiments of the present application and corresponding drawings. Obviously, the described embodiments are only part of the embodiments of the present application, rather than all embodiments. Based on the embodiments in the present application, all other embodiments obtained by those of ordinary skill in the art without creative work fall within the protection scope of the present application.

This embodiment provides a steel plate and a production method thereof. Compared with existing marine atmospheric corrosion-resistant steel, the steel plate adopts a corrosion-resistant alloying composition system with Ce+Sn+Cu composite addition. The addition of Ce can not only improve the corrosion resistance of the steel plate, but also Ce easily combines with oxygen to generate spherical oxides and has the ability to induce acicular ferrite nucleation within grains, thereby improving the welding performance of the steel plate. Based on the comprehensive design of chemical components, through precise control of process parameters during rolling process and cooling process, a marine atmospheric corrosion-resistant steel plate capable of withstanding ultra-high line energy welding and with good comprehensive performance is obtained.

The chemical components of the steel plate include in percent by mass: Ce: 0.05~0.5%, Sn: 0.05~0.5%, Cu: 0.1~0.5%, Si: 0.1~0.4%, C: ≤0.12%, Mn: <2.0%, with the balance of Fe and inevitable impurities.

Preferably, the content of Ce in the steel plate is 0.1~0.5% in percent by mass, and the content of Sn in the steel plate is 0.1~0.5% in percent by mass.

Specifically, the design principle of the chemical components of the steel plate is described as follows:
Ce: When the Ce content is greater than 0.05%, in terms of improving corrosion resistance, Ce easily segregates at grain boundaries, and Ce segregated at grain boundaries and phase boundaries can reduce the free energy of interfaces, alleviate corrosion caused by high energy of interfaces, thereby improving grain boundary corrosion resistance, while rare earth elements segregated on free surfaces will play a role in passivating rust layer. Moreover, Ce can also improve the pitting corrosion resistance of steel. In terms of improving welding performance, Ce easily combines with oxygen to generate spherical oxides, and Ce has the ability to induce acicular ferrite nucleation within grains. High-angle grain boundaries formed by acicular ferrite with its surrounding microstructure can inhibit crack propagation and increase crack propagation energy, thereby improving the low-temperature toughness of heat affected zone and enhancing welding performance. However, when Ce content exceeds 0.5%, excessive segregation at grain boundaries will affect the low-temperature toughness and welding performance of steel plate. Therefore, comprehensively considering performance and cost factors, in the present application, the Ce content is controlled at 0.05~0.50%, thereby ensuring good low-temperature toughness and welding performance of steel plate on the premise of ensuring corrosion resistance of steel plate.

Sn: Sn also easily segregates at grain boundaries, effectively improving grain boundary corrosion resistance, and Sn can form a dense SnO2 protective rust layer on the steel surface, thereby playing a role in improving corrosion resistance. When Sn content is too high, the improvement effect is not obvious and will affect the low-temperature toughness and welding performance of steel plate. Therefore, in the present application, the Sn content is controlled at 0.05~0.50%, ensuring good low-temperature toughness and welding performance of steel plate without reducing corrosion resistance.

Cu: Cu also easily segregates at grain boundaries, effectively improving grain boundary corrosion resistance. Moreover, Cu can hinder the crystallization of rust layer and promote the formation of α-FeOOH and amorphous Fe₃O₄. Cu can enrich at weak areas of rust layer and form oxides during corrosion process, tightly connecting rust layer and steel substrate, reducing cracks and voids in rust layer, and improving pitting corrosion resistance. In addition, Cu element has the effect of activating cathode, making steel substrate passivated and corrosion rate decreased. However, when Cu content is high, it is unfavorable to the welding performance of steel plate. Therefore, in the present application, the Cu content is controlled at 0.1~0.5%, both improving corrosion resistance and not affecting welding performance.

C: C is a strengthening element. C content can significantly affect the microstructure of steel and thus directly affect the strength of steel plate. However, when C content is high, the pearlite content will increase, thereby making the low-temperature toughness and welding performance of steel plate worse. Therefore, in the present application, the C content is controlled at ≤0.12% which combined with the overall design of other elements not only can ensure strengthening effect, but also improve the low-temperature toughness and welding performance of steel plate, and there is no need to use special mold flux in the continuous casting process to eliminate the problem of large liquid surface fluctuation.

Si: Si is mainly used for oxygen removal during molten steel smelting process. Although it can improve the strength of steel plate, it is unfavorable to welding performance. Especially under ultra-high heat input welding conditions, Si not only promotes the formation of M-A islands, but also the formed M-A islands have coarse size and uneven distribution, seriously damaging the low-temperature toughness of heat affected zone. Therefore, the Si content in steel should be controlled as low as possible. Therefore, in the present application, the Si content is controlled at 0.1~0.4%, ensuring deoxidation effect, improving strength and corrosion resistance without affecting the low-temperature toughness and weldability of steel plate.

Mn: Mn is a solid solution strengthening element that can improve the hardenability of steel plate and thus improve its strength. Meanwhile, Mn can also combine with harmful element S to reduce the hot brittleness of steel plate. However, excessive Mn will aggravate the segregation of elements such as P, Sb, Sn, thereby weakening the corrosion resistance of steel plate and deteriorating the low-temperature toughness and welding performance of steel plate core. Therefore, in the present application, the Mn content is controlled below 2.0%. On one hand, the strength of steel plate can be ensured, and on the other hand, the influence of segregation on corrosion resistance, low-temperature toughness and welding performance of steel plate can be reduced.

In summary, in this embodiment, Ce+Sn+Cu elements with composite addition are adopted, mainly making them segregate at grain boundaries, reducing the free energy of interfaces, alleviating corrosion caused by high energy of interfaces, improving grain boundary corrosion resistance, thereby enhancing the overall corrosion resistance of steel plate. The addition of Ce and the design of low Si make the steel plate have excellent welding performance.

As shown in Figure 1, the present application also provides a production method of the aforementioned steel plate. In this embodiment, the production method comprises processes:
S1: According to the chemical component, sequentially performing converter steelmaking process, Ladle Furnace refining process and RH Vacuum degassing process to obtain molten steel.

S2: Casting the molten steel through a continuous casting process to form a continuous casting slab.

S3: Heating and rolling the continuous casting slab to obtain a steel plate. In the rolling process, rough rolling and finish rolling are sequentially adopted, wherein the finish rolling stage is non-recrystallization zone rolling, a cumulative reduction ratio is controlled above 50%, a single pass reduction ratio is controlled above 15%, and a finishing rolling temperature is controlled below 780°C.

S4: Performing cooling process on the steel plate.

In step S1, the converter steelmaking process specifically comprises: adding clean steel and scrap steel at a ratio of (5~6):1, controlling a molten iron temperature to 1350~1450°C, and sequentially adding ferromanganese, ferrosilicon, and lime to the molten iron for smelting.

Among them, clean steel is steel that has been refined and purified, while scrap steel is steel used for recycling and reuse. In converter steelmaking process, the temperature of molten iron is controlled at 1350~1450°C. Appropriate temperature can ensure smooth smelting reaction and is conducive to the melting and reaction of additives. Adding ferromanganese can increase the manganese content of steel and improve the strength, toughness and wear resistance of steel. Adding ferrosilicon can increase the silicon content in steel and affect the deoxidation and composition adjustment of steel. Adding lime is used to capture impurities such as sulfur, thereby reducing the sulfur content in steel.

The Ladle Furnace refining process specifically comprises: during the Ladle Furnace refining process, performing bottom argon blowing throughout and stirring the molten steel, keeping the molten steel covered.

Through bottom argon blowing, bubbles can be generated to push molten steel upward and exchange with gas, thereby promoting oxidation and discharge of unstable elements, reducing impurity content in molten steel, and improving steel purity. In addition, argon can also cool molten steel and control temperature. The stirrer creates vortex-like movement of molten steel by generating bubbles and pushing them upward from the bottom, making various elements and impurities in molten steel mix evenly.

The RH Vacuum degassing process specifically comprises: during the RH Vacuum degassing process, adding rare earth cored wire of 800m or more, and adding carbonized rice husk for heat preservation before tapping.

The RH Vacuum degassing furnace is mainly used to reduce oxygen content and impurities in molten steel to improve steel purity and quality. Before tapping, some heat preservation materials are usually added to the RH Vacuum degassing furnace to maintain stable temperature of molten steel and prevent excessive heat loss. In this embodiment, carbonized rice husk is adopted, which is a commonly used heat preservation material made from rice husk through special treatment and has good heat preservation performance. Carbonized rice husk is added to the molten steel surface in the RH Vacuum degassing furnace to cover the molten steel surface and form a heat preservation layer, thereby preventing molten steel from losing heat too quickly and maintaining molten steel temperature within a certain range for subsequent continuous casting process.

In step S2, the continuous casting process specifically comprises: controlling a casting temperature to 1540~1560°C, controlling a continuous casting speed to 1.1~1.3m/min, and obtaining a continuous casting slab with a thickness of 320mm through continuous casting.

Controlling molten steel casting temperature within the range of 1540~1560°C can achieve appropriate solidification rate, ensure uniform and dense internal microstructure of slab, and also help avoid surface quality problems. Controlling continuous casting speed within the range of 1.1~1.3m/min can achieve appropriate drawing speed, enabling slab to gradually solidify and maintain appropriate form, thereby obtaining uniform internal microstructure and good appearance quality.

In step S3, during the rough rolling stage, the thickness of slab is gradually reduced through multiple rolling passes, while preliminary plastic deformation and shape adjustment are performed. During this process, the internal structure of slab gradually changes, forming required metal flow and grain reorganization.

During the finish rolling stage, rolling is performed in the non-recrystallization zone. Non-recrystallization zone rolling refers to maintaining steel plate within a certain temperature range for plastic deformation during rolling deformation process to avoid recrystallization. Steel plate is maintained within a temperature range below its recrystallization temperature but above room temperature for plastic deformation. Steel plate will not undergo grain rearrangement and refinement during deformation process, thereby maintaining original grain structure, making steel plate still maintain cold deformation state after deformation, thus achieving higher hardness, strength and anti-deformation performance.

During the finish rolling stage, controlling cumulative reduction ratio above 50% can ensure that slab obtains sufficient deformation to improve its internal grain structure and performance. Single pass reduction ratio is controlled above 15%, making the degree of deformation in each rolling pass relatively high, which is beneficial to grain refinement and realization of plastic deformation. Controlling finishing rolling temperature below 780°C helps complete deformation in cold deformation state while avoiding recrystallization, thereby maintaining cold deformation state of slab.

In step S4, the cooling process specifically comprises: first performing water cooling on the rolled steel plate, controlling a water cooling rate above 12°C/s, controlling a final cooling temperature to 480~540°C, and performing air cooling to below 350°C after water cooling.

During the water cooling stage, through rapid cooling, the exterior of steel plate rapidly solidifies, thereby retaining its internal plastic deformation and refined grain structure. The final cooling temperature is controlled at 480~540°C. Within this temperature range, steel plate continues to cool gradually, grains continue to be refined, and internal stress is gradually relieved.

Specifically, for the finally obtained steel plate, its performance characterization is as follows:
In a cyclic immersion corrosion test, an average corrosion weight loss rate of the steel plate is <1.2 g/(m²×h), wherein the cyclic immersion corrosion test refers to standard test conditions of GB/T 24195-2009 "Test methods for corrosion resistance of metals and alloys in corrosive environment - Cyclic immersion corrosion test".

In terms of welding performance, referring to standard test conditions of GB/T 2650-2008 "Metallic materials - Charpy pendulum impact test method", under the condition that welding heat input is not less than 600kJ/cm, an impact energy of heat affected zone (HAZ) at -40°C is above 200J.

In summary, the steel plate adopts a corrosion-resistant alloying composition system with Ce+Sn+Cu composite addition. The addition of Ce can not only improve the corrosion resistance of steel plate, but also Ce easily combines with oxygen to generate spherical oxides and has the ability to induce acicular ferrite nucleation within grains, thereby improving the welding performance of steel plate. Based on the comprehensive design of chemical components, through precise control of process parameters during rolling process and cooling process, a marine atmospheric corrosion-resistant steel plate capable of withstanding ultra-high line energy welding and with good comprehensive performance is obtained.

The specific embodiments of the present application are further introduced through 9 specific examples and 3 comparative examples below.

Examples 1~9 and Comparative Examples 1~3 all provide a steel plate. The chemical components of steel plate are shown in Table 1.

**Table 1**

| | Chemical components in percent by mass (%) | | | | | | |
|---|---|---|---|---|---|---|---|
| | C | Si | Mn | Ce | Sn | Cu | Remarks |
| Example 1 | 0.08 | 0.35 | 1.80 | 0.45 | 0.40 | 0.35 | |
| Example 2 | 0.08 | 0.30 | 1.85 | 0.40 | 0.45 | 0.30 | |
| Example 3 | 0.10 | 0.40 | 1.65 | 0.10 | 0.35 | 0.50 | Contains 0.02%Zr |
| Example 4 | 0.10 | 0.25 | 1.60 | 0.15 | 0.50 | 0.45 | |
| Example 5 | 0.12 | 0.20 | 1.75 | 0.25 | 0.45 | 0.20 | |
| Example 6 | 0.12 | 0.10 | 1.70 | 0.35 | 0.20 | 0.35 | |
| Example 7 | 0.06 | 0.25 | 1.95 | 0.30 | 0.25 | 0.45 | |
| Example 8 | 0.06 | 0.35 | 1.90 | 0.50 | 0.10 | 0.40 | Contains 0.01 %Zr |
| Example 9 | 0.07 | 0.35 | 1.60 | 0.45 | 0.15 | 0.35 | |
| Comparative Example 1 | 0.08 | 0.30 | 1.80 | 0.35 | 0.10 | 0.25 | |
| Comparative Example 2 | 0.12 | 0.20 | 1.70 | 0.45 | - | 0.40 | |
| Comparative Example 3 | 0.06 | 0.35 | 1.90 | 0.40 | 0.20 | 0.40 | |

Steel plates in Examples 1~9 and Comparative Examples 1~3 are produced according to the above production method. Cored wire for steelmaking and addition process are shown in Table 2. Rolling process parameters are shown in Table 3.

**Table 2**

| | Feeding length of cored wire | Feeding speed of cored wire | Remarks |
|---|---|---|---|
| | m | m/s | |
| Example 1 | 1000 | 5 | Thickness of the cored wire steel strip is 0.8mm, size of the rare earth alloy particles is 0.5~2mm |
| Example 2 | 1000 | 5 | |
| Example 3 | 1000 | 5 | |
| Example 4 | 800 | 4 | Thickness of the cored wire steel strip is 0.7mm, size of the rare earth alloy particles is 0.5~2mm |
| Example 5 | 800 | 4 | |
| Example 6 | 800 | 4 | |
| Example 7 | 900 | 4.5 | Thickness of the cored wire steel strip is 0.75mm, size of the rare earth alloy particles is 0.5~2mm |
| Example 8 | 900 | 4.5 | |
| Example 9 | 900 | 4.5 | |
| Comparative Example 1 | 900 | 3 | Thickness of the cored wire steel strip is 0.5mm, size of the rare earth alloy particles is 0.5~2mm |
| Comparative Example 2 | 1000 | 6 | |
| Comparative Example 3 | 800 | 4 | |

**Table 3**

| | Cumulative reduction ratio of finish rolling % | Finishing rolling temperature °C | Cooling rate °C/s | Final cooling temperature °C | Remarks |
|---|---|---|---|---|---|
| Example 1 | 55 | 770 | 15.5 | 490 | Final cooling temperature is below 500°C |
| Example 2 | 60 | 775 | 16.8 | 485 | |
| Example 3 | 58 | 780 | 13.0 | 495 | |
| Example 4 | 65 | 770 | 14.5 | 495 | Finishing |
| Example 5 | 55 | 775 | 18.0 | 475 | rolling temperature is below 780°C |
| Example 6 | 50 | 760 | 16.5 | 485 | |
| Example 7 | 58 | 770 | 14.0 | 486 | |
| Example 8 | 55 | 765 | 15.6 | 480 | |
| Example 9 | 60 | 780 | 17.5 | 496 | |
| Comparative Example 1 | 57 | 770 | 10.5 | 490 | |
| Comparative Example 2 | 43 | 770 | 14.0 | 490 | |
| Comparative Example 3 | 56 | 770 | 13.0 | 505 | |

The corrosion resistance of steel plates in Examples 1~9 and Comparative Examples 1~3 is tested using a standard cyclic immersion corrosion test machine. The average corrosion weight loss rate and welding performance of Examples 1~9 and Comparative Examples 1~3 are shown in Table 4.

From Table 4, it can be seen that the average corrosion weight loss rates of steel plates in Examples 1~9 are all <1.2 g/(m²×h). Comparative Example 1 does not meet corrosion resistance requirements. Comparative Examples 2 and 3 do not meet low-temperature toughness requirements.

**Table 4**

| | Corrosion resistance | Performance of welded joints | | |
|---|---|---|---|---|
| | Average corrosion weight loss rate g/(m²×h) | Welding heat input kJ/cm | Tensile strength MPa | Impact energy of heat affected zone at -40°C J |
| Example 1 | 0.44 | 600 | 583 | 273,265,249 |
| Example 2 | 0.46 | | 575 | 285,276,275 |
| Example 3 | 0.48 | | 588 | 269,281,279 |
| Example 4 | 0.58 | 700 | 575 | 245,256,245 |
| Example 5 | 0.47 | | 573 | 251,233,241 |
| Example 6 | 0.48 | | 560 | 229,250,246 |
| Example 7 | 0.42 | 650 | 554 | 235,216,225 |
| Example 8 | 0.45 | | 561 | 208,221,210 |
| Example 9 | 0.49 | | 553 | 215,214,206 |
| Comparative Example 1 | 2.54 | 600 | 551 | 133,125,139 |
| Comparative Example 2 | 0.58 | 700 | 543 | 15,14,13 |
| Comparative Example 3 | 0.64 | 650 | 505 | 25,29,21 |

Combined with the above test results, it can be seen that the steel plate provided by this embodiment not only has controllable cost, simple and efficient process flow, but also the obtained steel plate has excellent corrosion resistance, low-temperature toughness, and welding performance, which is conducive to popularization and application.

It should be understood that although this specification is described in terms of embodiments, not every embodiment contains only one independent technical solution. This narrative manner of the specification is merely for clarity. Those skilled in the art should regard the specification as a whole, and the technical solutions in various embodiments may also be appropriately combined to form other embodiments understandable to those skilled in the art.

The series of detailed descriptions listed above are merely specific descriptions of feasible embodiments of the present application and are not intended to limit the protection scope of the present application. Any equivalent embodiments or modifications made without departing from the technical spirit of the present application should be included within the protection scope of the present application.

## Claims

1. A production method of steel plate, wherein comprising steps:
chemical components of the steel plate include in percent by mass: Ce: 0.05~0.5%, Sn: 0.05~0.5%, Cu: 0.1~0.5%, Si: 0.1~0.4%, C: ≤0.12%, Mn: <2.0%, with the balance of Fe and inevitable impurities;
according to the above chemical components, sequentially performing converter steelmaking process, Ladle Furnace refining process and RH Vacuum degassing process to obtain molten steel;
casting the molten steel through a continuous casting process to form a continuous casting slab;
heating and rolling the continuous casting slab to obtain a steel plate, wherein in the rolling process, rough rolling and finish rolling are sequentially adopted, wherein the finish rolling stage is non-recrystallization zone rolling, a cumulative reduction ratio is controlled above 50%, a single pass reduction ratio is controlled above 15%, and a finishing rolling temperature is controlled below 780°C;
performing a cooling process on the steel plate;
the obtained steel plate has an average corrosion weight loss rate <1.2g/(m²×h) in a cyclic immersion corrosion test, and under the condition that welding heat input is not less than 600kJ/cm, an impact energy of heat affected zone (HAZ) of the steel plate at -40°C is ≥200J.

2. The production method of steel plate according to claim 1, wherein the content of Ce in the steel plate is 0.1~0.5% in percent by mass, and the content of Sn in the steel plate is 0.1~0.5% in percent by mass.

3. The production method of steel plate according to claim 1, wherein the converter steelmaking process specifically comprises:
adding clean steel and scrap steel at a ratio of (5~6):1, controlling a molten iron temperature to 1350~1450°C, and sequentially adding ferromanganese, ferrosilicon, and lime to the molten iron for smelting.

4. The production method of steel plate according to claim 1, wherein the Ladle Furnace refining process specifically comprises:
during the Ladle Furnace refining process, performing bottom argon blowing throughout and stirring the molten steel, keeping the molten steel covered.

5. The production method of steel plate according to claim 1, wherein the RH Vacuum degassing process specifically comprises:
during the RH Vacuum degassing process, adding rare earth cored wire of 800m or more at a speed of 4~5 m/s, and adding carbonized rice husk for heat preservation before tapping.

6. The production method of steel plate according to claim 1, wherein the continuous casting process specifically comprises:
controlling a casting temperature to 1540~1560°C, controlling a continuous casting speed to 1.1~1.3m/min, and obtaining a continuous casting slab with a thickness of 320mm through continuous casting.

7. The production method of steel plate according to claim 1, wherein the cooling process specifically comprises:
first performing water cooling on the rolled steel plate, controlling a water cooling rate above 12°C/s, controlling a final cooling temperature to 480~540°C, and performing air cooling to below 350°C after water cooling.

8. A steel plate, wherein chemical components of the steel plate include in percent by mass: Ce: 0.05~0.5%, Sn: 0.05~0.5%, Cu: 0.1~0.5%, Si: 0.1~0.4%, C: ≤0.12%, Mn: <2.0%, with the balance of Fe and inevitable impurities.

9. The steel plate according to claim 8, wherein the content of Ce in the steel plate is 0.1~0.5% in percent by mass, and the content of Sn in the steel plate is 0.1~0.5% in percent by mass.

10. The steel plate according to claim 8, wherein in a cyclic immersion corrosion test, an average corrosion weight loss rate of the steel plate is <1.2g/(m²×h).

11. The steel plate according to claim 8, wherein under the condition that welding heat input is not less than 600kJ/cm, an impact energy of heat affected zone (HAZ) of the steel plate at -40°C is ≥200J.
